# EUROPÄISCHE PATENTSCHRIFT

(11) **EP 0 849 509 B1**
(45) Veröffentlichungstag und Bekanntmachung des Hinweises auf die Patenterteilung: **12.02.2003**
(21) Anmeldenummer: 97119533.4
(22) Anmeldetag: 07.11.1997
(51) Int. Cl.: F16H 63/20

(54) **Schalteinrichtung für ein Zahnräder-Wechselgetriebe**
Gearshift device for a change-speed gearbox
Mécanisme de changement de vitesse pour une boîte de vitesse à engrenages

(30) Priorität: 19.12.1996 DE 19653170
(43) Veröffentlichungstag der Anmeldung: 24.06.1998
(73) Patentinhaber: Bayerische Motoren Werke Aktiengesellschaft, 80788 München (DE)
(72) Erfinder: Wagner, Norbert, 80339 München (DE); Esser, Peter-Josef, 82229 Seefeld (DE); Rastinger, Bernhard, 81249 München (DE)

(56) Entgegenhaltungen:
- EP-A- 0 131 720
- EP-A- 0 530 466
- US-A- 4 277 983

## Beschreibung

Die vorliegende Erfindung betrifft eine Schalteinrichtung für ein Zahnräder-Wechselgetriebe eines Kraftfahrzeugs gemäß dem Oberbegriff des Patentansprüche 1 und 3.

Aus der EP 0530 466 A1 ist eine Schalteinrichtung für ein Zahnräder-Wechselgetriebe bekannt, mit einer zentralen Schalt- und Wählwelle, die drehbar und axial verschieblich im Getriebegehäuse gelagert ist. Auf der Schalt- und Wählwelle ist eine Mitnehmerbuchse fest angeordnet, die über einen Hebelmechanismus mit einer Federvorspanneinrichtung verbunden ist. Durch Verdrehen der Schalt- und Wählwelle sind einzelne Schaltgassen anwählbar. Beim Verdrehen der Schalt- und Wählwelle erfolgt eine Bewegungsübertragung auf den Federmechanismus. Der Federmechanismus erzeugt vorgegebene Schaltgassenwählkräfte und bringt die Schalt- und Wählwelle in eine Neutralstellung.

Bei einer anderen bekannten Schalteinrichtung für ein Zahnräder-Wechselgetriebe eines Kraftfahrzeugs, mit einer zentralen Wähl- und Schaltwelle, die im Getriebegehäuse verdrehbar und axial verschiebbar ist, wobei durch deren Verdrehung jeweils eine in einer Schaltgasse zu betätigende Schaltkupplung anwählbar und durch deren anschließende axiale Verschiebung Gangstufen schaltbar sind, findet eine als Hebel ausgebildete Wählschwinge Verwendung, in deren Nabe die Wähl- und Schaltwelle über in axial verlaufende Führungsnuten der Nabe eingreifende Wälzkörper drehfest und axial verschiebbar geführt ist. Dabei ist die Wählschwinge in Umfangsrichtung gegen die Kraft zumindest eines gehäusefesten Federelements aus ihrer Neutral- in eine Wählendstellung verschwenkbar. Die Wählkraft in Umfangsrichtung der Wähl- und Schaltwelle wird von dieser durch die formschlüssige Verbindung über die Wälzkörper auf die Wählschwinge übertragen. Dieselben Wälzkörper in den Längsnuten der Wähl- und Schaltwelle bewirken aber auch die axiale Verschieblichkeit der Wähl- und Schaltwelle in der Wählschwinge.

Wird mittels eines Schalthebels eine Schaltgasse angewählt, so erfolgt eine Verdrehung der Wähl- und Schaltwelle, bei der die Wälzkörper die Wählschwinge aus ihrer mittleren Neutralstellung heraus jeweils gegen die gehäusefesten Federelemente bewegen. Bei der anschließenden Schaltbewegung wird die Wähl- und Schaltwelle axial verschoben, so daß die Wälzkörper in den Führungsnuten der Wählschwinge abrollen. Die Wählschwinge verursacht also das Auftreten einer bestimmten Wählkraft am Schalthebel, da sie nur gegen die Widerstandskraft der Federelemente bewegbar ist und diese Umfangskraft auf die Schalt- und Wählwelle überträgt.

Außerdem legt das Federelement die Wählschwinge und damit die Schalt- und Wählwelle in einer bestimmten Neutralposition fest.

Eine solche Linearführung der Schalt- und Wählwelle, in der Nabe der Wählschwinge über Wälzkörper, ist in Umfangsrichtung mit Spiel behaftet. Das kommt daher, weil die Wälzkörper innerhalb der Führungsnuten radiales Spiel haben müssen, damit sie sich beim Abrollen an einer der beiden Laufbahnen der jeweiligen Führungsnut gegenüber der anderen Laufbahn frei bewegen können. Wäre dieses radiale Spiel nicht vorhanden, so würden die Wälzkörper in den Führungsnuten klemmen. Durch dieses radiale Spiel entsteht in Wählrichtung in der Schalteinrichtung ein Leerweg, der in nachteiliger Weise Vibrationen am Schalthebel zuläßt.

Außerdem ist für die Herstellung der Längsnuten eine aufwendige Bearbeitung der Wähl- und Schaltwelle nötig und das Lager mit den Wälzkörpem ist teuer.

Die DE 41 16 823 A1 zeigt eine solche Schalteinrichtung.

Es ist Aufgabe der Erfindung, eine Schalteinrichtung mit Wählschwinge bereitzustellen, bei der die Wählschwinge auf einfache und preiswert herzustellende Weise mit der Schalt- und Wählwelle verbunden ist und die gleichzeitig eine spielfreie und reibungsarme Mitnahme in Umfangsrichtung zur Wähl- und Schaltwelle gewährleistet.

Die Aufgabe wird erfindungsgemäß mit dem kennzeichnenden Merkmal des Anspruchs 1 gelöst. Weitere Ausgestaltungen der Erfindung ergeben sich aus den Unteransprüchen.

Nach der Erfindung ist die Wählschwinge in axialer Richtung fest mit der Schalt- und Wählwelle verbunden.

Das hat den Vorteil, daß die kostspielige Lagerung der Schalt- und Wählwelle in der Wählschwinge durch eine nur in Umfangsrichtung formschlüssige Linearfuhrung entfällt. Die Wählschwinge ist gemäß der Erfindung axial und in Umfangsnchtung fest mit der Schalt- und Wählwelle verbunden. Damit entfällt die teure Bearbeitung der Schalt- und Wählwelle und ihre Lagerung kann in gewöhnlichen Lagerbüchsen im Getriebegehäuse erfolgen. Durch den Festsitz zwischen Wählschwinge und Schalt- und Wählwelle entfällt auch das Spiel zwischen Schalt- und Wählwelle und Wählschwinge in Wählrichtung, was Vibrationen am Schalthebel verhindert.

Eine bevorzugte Ausführung der Erfindung ist dadurch gekennzeichnet, daß Wählschwinge und Federelement über Wirkflächen aneinander gleitend oder abwälzend zusammenwirken, wobei das Federelement und die Wählschwinge sowohl in axialer Richtung, als auch in Umfangsrichtung der Wähl- und Schaltwelle gegeneinander bewegbar sind. Durch das gleitende oder abwälzende Zusammenwirken der Wirkflächen von Wählschwinge und Federelement wird beim Erzeugen der Wählkraft ebenfalls das Entstehen von Spiel in der Schalteinrichtung ausgeschlossen.

Bei einer weiteren bevorzugten Ausführung der Erfindung sind Wählschwinge und Federelement durch einen Wählstift verbunden und in axialer Richtung und in Umfangsrichtung der Schalt- und Wählwelle gegeneinander bewegbar. Die Verbindung von Wählschwinge und Federelement durch einen Wählstift ist eine sehr einfache, preiswerte Lösung, wobei der Wählstift entweder in der Wählschwinge axial verschiebbar und im Federelement axial fest gelagert werden kann oder umgekehrt.

Bei einer vorteilhaften Ausführung der Erfindung wird der Wählstift durch eine in Umfangsrichtung bewegliche Nabe auf der Schalt- und Wählwelle abgestützt. Das ergibt vorteilhafterweise eine sehr stabile Ausbildung der Wählstiftlagerung, wobei zur Wählkrafterzeugung Schenkelfedern gemäß dem Stand der Technik verwendet werden können, deren Federkraft, als Wählkraft, die Nabe und somit den Wählstift beaufschlagt.

Bei einer weiteren bevorzugten Ausführung der Erfindung wird die Wählschwinge durch einen Schaltfinger gebildet. Das ergibt eine besonders einfache Ausführung der Erfindung, da der Schaltfinger bereits im Getriebe vorhanden ist, als in axialer Richtung und in Umfangsrichtung fest mit der Schalt- und Wählwelle verbundener Hebel. Wird dieser direkt mit dem Wählstift verbunden, entsteht eine besonders preiswerte Ausführung der Erfindung.

Zwei bevorzugte Ausführungsbeispiele der Erfindung sind in der nachfolgenden Beschreibung und der zugehörigen Zeichnung näher dargestellt. Es zeigen
- Figur 1: eine Schalteinrichtung gemäß dem Stand der Technik in räumlicher Darstellung,
- Figur 2: eine Schalteinrichtung gemäß der Erfindung, als Teilschnitt durch ein Getriebe, bei der ein Schaltfinger vollständig die Funktion der Wählschwinge übemimmt und
- Figur 3: einen Teilschnitt durch ein Getriebe mit einer Schalteinrichtung gemäß der Erfindung, bei der der Wählstift durch eine Nabe auf der Schalt- und Wählwelle abgestützt wird.

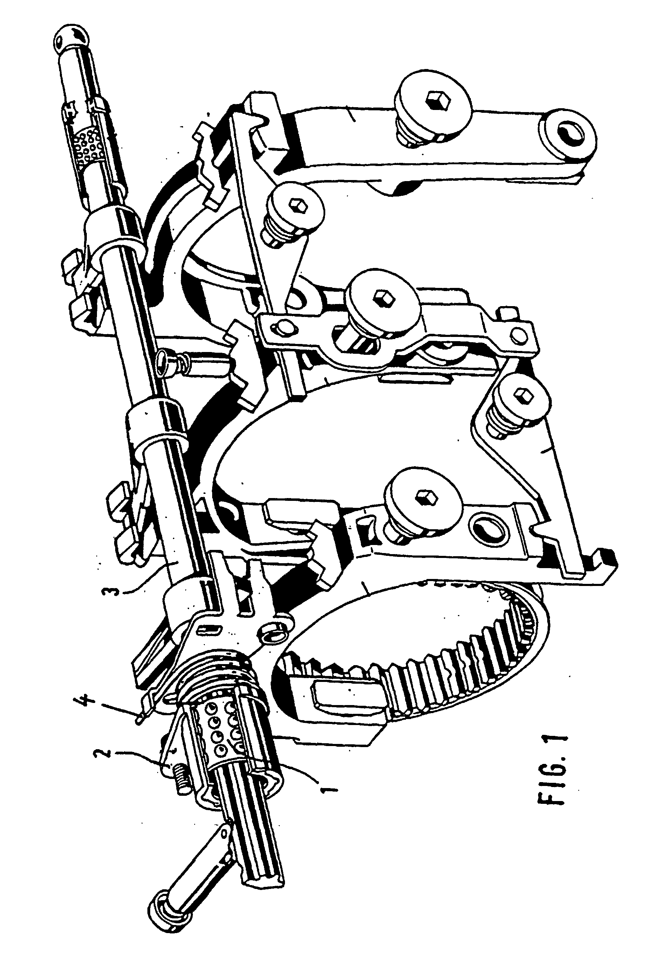

In Figur 1 ist eine Schalteinrichtung gemäß dem Stand der Technik dargestellt, bei der eine Schalt- und Wählwelle 3 axial verschieblich und in Umfangsrichtung fest über eine Linearführung 1 mit einer Wählschwinge 2 verbunden ist. Die Wählschwinge 2 stützt sich an einer Schenkelfeder 4 ab, die als Federelement durch ihren Widerstand einen bestimmten Wählkraftverlauf auf die Schalt- und Wählwelle 3 und damit auf einen nicht gezeichneten Schalthebel überträgt. Außerdem legt die Schenkelfeder 4 die Schalt- und Wählwelle in einer bestimmten Neutralposition fest. Die Linearführung 1 besteht aus einem teuren Lager mit Wälzkörpern, die in Nuten formschlüssig die Wählschwinge in Umfangsrichtung fest mit der Schalt- und Wählwelle verbinden. Die Herstellung der Nuten in der Schalt- und Wählwelle und in der Wählschwinge ist aufwendig und kostspielig.

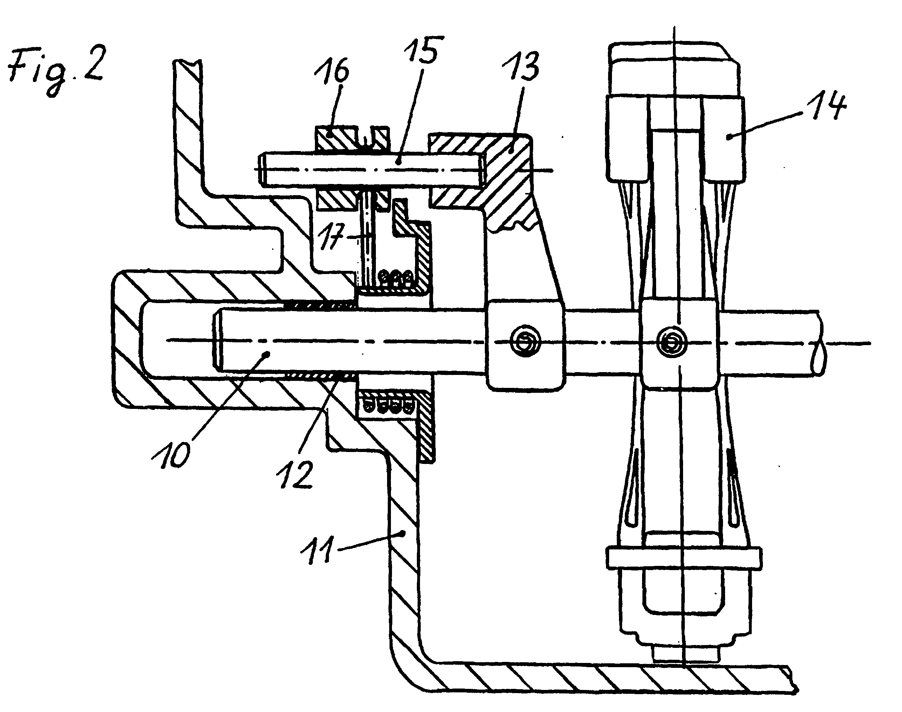

Deshalb zeigt Figur 2 gemäß der Erfindung eine Schalt- und Wählwelle 10, die in einem Getriebegehäuse 11 über eine Lagerbüchse 12 axial verschieblich und in Umfangsrichtung verdrehbar gleitgelagert ist. Mit der Schalt- und Wählwelle 10 ist ein Schaltfinger 13 in axialer Richtung und in Umfangsrichtung fest verbunden. Im Schaltfinger 13, der bei einer Schaltbewegung der Schalt- und Wählwelle 10 eine Schaltschwinge 14 in axialer Richtung verschiebt, ist parallel zur Schalt- und Wählwelle 10 ein Wählstift 15 mit seinem einen Ende fest angebracht. Auf dem Wählstift 15 sitzt verdrehbar und in axialer Richtung verschiebbar eine Nabe 16, an der sich eine Schenkelfeder 17 zur Wählkrafterzeugung abstützt. Diese Schenkelfeder 17 ist Teil eines Federelements, das sowohl die Wählkraft am Schalthebel erzeugt, als auch diesen in einer bestimmten Neutralposition festlegt.

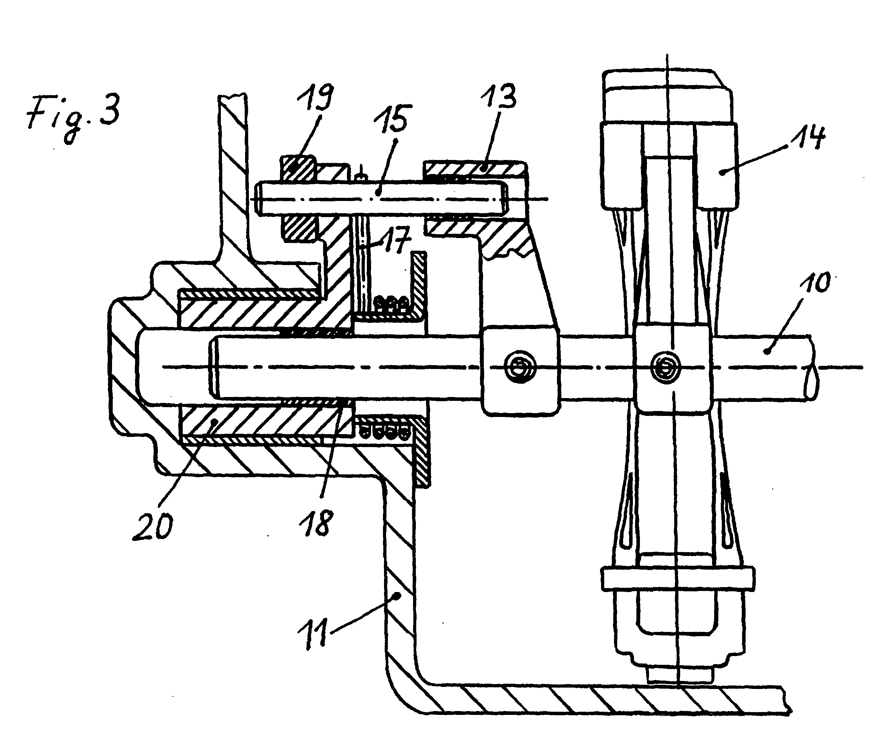

Im Unterschied zu Figur 2, zeigt Figur 3, daß der Wählstift 15 axial verschieblich und verdrehbar im Schaltfinger 13 angebracht ist. Dafür ist er mit seinem anderen Ende fest mit einer weiteren Nabe 20 verbunden, die auf der Schalt- und Wählwelle 10 über eine zusätzliche Lagerbüchse 18 gleitgelagert ist. Die weitere Nabe 20 sitzt in Umfangsrichtung verdrehbar in dem Getriebegehäuse 11. Die Schenkelfeder 17, die die Wählkraft erzeugt, stützt sich mit einem Ende am Wählstift 15 ab. Ein weiteres, nicht gezeichnetes, Federelement, das am Getriebegehäuse 11 angebracht ist, wirkt auf eine verdrehbar auf dem Wählstift 15 sitzende Rolle 19, die mit ihrer Umfangsfläche als Wirkfläche an einer zugehörigen Wirkfläche des weiteren Federelements abwälzt.

## Patentansprüche

1. Schalteinrichtung für ein mehrgängiges Zahnräder-Wechselgetriebe eines Kraftfahrzeuges, mit einer zentralen Schalt- und Wählwelle (10), die in einem Getriebegehäuse (11) verdrehbar und axial verschiebbar gelagert ist, wobei durch deren Verdrehung jeweils eine in einer Schaltgasse zu betätigende Schaltkupplung anwählbar und durch deren anschließende axiale Verschiebung Gangstufen schaltbar sind, mit mindestens einer Wählschwinge (13), die drehfest mit der Schalt- und Wählwelle (10) verbunden ist und die gegen die Kraft zumindest eines Federelements (16, 17) aus ihrer Neutral- in mindestens eine Wählendstellung verschwenkbar ist, wobei die Wählschwinge (13) in axialer Richtung fest mit der Schalt- und Wählwelle (10) verbunden ist und wobei
die Wählschwinge (13) und das Federelement (16, 17) in axialer Richtung der Schalt- und Wählwelle (10) gegeneinander bewegbar über einen Wählstift (15) in Verbindung stehen,
der Wählstift (15) in der Wählschwinge (13) axial festgelegt ist und im Federelement (16, 17) axial verschiebbar ist,
das Federelement (16, 17) eine zylindrische Nabe (16) aufweist, die auf dem Wählstift (15) in axialer Richtung verschiebbar angeordnet ist,
**dadurch gekennzeichnet,**
**dass** der Wählstift (15) nur einseitig an der Wählschwinge (13) befestigt ist und axial von der Wählschwinge (13) absteht,
**dass** das Federelement (16, 17) durch die zylindrische Nabe (16) und eine Schenkelfeder (17) gebildet ist,
**dass** die Schenkelfeder (17) eine Wicklung aufweist, die im wesentlichen koaxial zu der Schalt- und Wählwelle (10) angeordnet ist, wobei die Schaltund Wählwelle (10) sich durch die Wicklung hindurch erstreckt und
**dass** die Schenkelfeder (17) einen von der Wicklung abstehenden Federarm aufweist, der gegen die Nabe (16) drückt.

2. Schalteinrichtung nach Anspruch 1, **dadurch gekennzeichnet, dass** die Nabe (16) an ihrem Außenumfang eine Nut aufweist, in die der Federarm der Schenkelfeder (17) eingreift.

3. Schalteinrichtung für ein mehrgängiges Zahnräder-Wechselgetriebe eines Kraftfahrzeuges, mit einer zentralen Schalt- und Wählwelle (10), die in einem Getriebegehäuse (11) verdrehbar und axial verschiebbar gelagert ist, wobei durch deren Verdrehung jeweils eine in einer Schaltgasse zu betätigende Schaltkupplung anwählbar und durch deren anschließende axiale Verschiebung Gangstufen schaltbar sind, mit mindestens einer Wählschwinge (13), die drehfest mit der Schalt- und Wählwelle (10) verbunden ist und die gegen die Kraft zumindest eines Federelements (17) aus ihrer Neutral- in mindestens eine Wählendstellung verschwenkbar ist, wobei die Wählschwinge (13) in axialer Richtung fest mit der Schalt- und Wählwelle (10) verbunden ist und wobei
die Wählschwinge (13) und das Federelement (17) in axialer Richtung der Schalt- und Wählwelle (10) gegeneinander bewegbar über einen Wählstift (15) in Verbindung stehen,
**dadurch gekennzeichnet,**
**dass** der Wählstift (15) an einem Halteelement (20) befestigt ist, das koaxial und drehbar in Bezug auf die Schalt- und Wählwelle (10) gelagert ist und
das sich radial in Bezug auf die Schalt- und Wählwelle (10) von dieser weg erstreckt, wobei der Wählstift (15) in der Wählschwinge (13) axial verschiebbar ist,
**dass** das Federelement (17) durch eine Schenkelfeder (17) gebildet ist, welche eine Wicklung aufweist, die im wesentlichen koaxial zu der Schalt- und Wählwelle (10) angeordnet ist, wobei die Schalt- und Wählwelle (10) sich durch die Wicklung hindurch erstreckt und
**dass** die Schenkelfeder (17) einen von der Wicklung abstehenden Federarm aufweist, der auf den Wählstift (15) eine Kraft aufbringt, die bezüglich der Schalt- und Wählwelle (10) in Umfangsrichtung wirkt.

4. Schalteinrichtung nach Anspruch 3, **dadurch gekennzeichnet, dass** das Halteelement (20) eine Nabe ist, die auf der Schalt- und Wählwelle (10) gleitgelagert ist.

5. Schalteinrichtung nach Anspruch 3 oder 4, **dadurch gekennzeichnet, dass** der Federarm unmittelbar am Wählstift (15) anliegt.

6. Schalteinrichtung nach einem der Ansprüche 3 bis 5, **dadurch gekennzeichnet, dass** auf dem Wählstift (15) eine Rolle (19) drehbar angeordnet ist, die mit ihrer Umfangsfläche als Wirkfläche an einer zugeordneten Wirkfläche eines weiteren Federelements abwälzt, das an dem Getriebegehäuse (11) angeordnet ist.

## Claims

1. A shifting device for a multi speed gear wheel changing gearbox of a motor vehicle with a central shifting and selecting shaft (10), which is mounted rotatably and axially moveable in a gearbox housing (11), whereby a shift coupling can be selected for actuation in each case by its rotation and by its subsequent axial movement gear speeds can be shifted, with at least one swinging arm selector (13), which is joined so as not to rotate to the shifting and selecting shaft (10) and which can be pivoted against the power of at least one spring element (16, 17) from its neutral into at least one selector position, whereby the swinging arm selector (13) is joined firmly to the shifting and selecting shaft (10) in the axial direction and whereby
the swinging arm selector (13) and the spring element (16, 17) are in moveable connection with each other via a selector pin (15) in the axial direction on the shifting and selecting shaft (10),
the selector pin (15) is axially fastened in the swing arm selector (13) and axially moveable in the spring element (16, 17),
the spring element (16, 17) has a cylindrical hub (16), which is arranged on the selector pin (15) so as to be moveable in the axial direction,
**characterised in that,**
the selector pin (15) is fastened only on one side to the swinging arm selector (13) and extends axially from the swinging arm selector (13),
the spring element (16, 17) is formed by the cylindrical hub (16) and a cylindrical helical spring (17),
the cylindrical helical spring (17) has a winding, which is arranged, essentially coaxial with the shifting and selecting shaft (10) whereby the shifting and selecting shaft (10) extends through the coils and the cylindrical helical spring (17) has a spring arm extending out from the winding, which presses against the hub (16).

2. A shifting device according to claim 1, **characterised in that** the hub (16) has a groove on its outer circumference into which the spring arm of the cylindrical helical spring (17) engages.

3. A shifting device for a multi speed gear wheel changing gearbox of a motor vehicle with a central shifting and selecting shaft (10), which is mounted rotatably and axially moveable in a gearbox housing (11), whereby a shift coupling can be selected for actuation in each case by its rotation and by its subsequent axial movement gear speeds can be shifted, with at least one swinging arm selector (13), which is joined so as not to rotate to the shifting and selecting shaft (10) and which can be pivoted against the power of at least one spring element (17) from its neutral into at least one selector position, whereby the swinging arm selector (13) is joined firmly to the shifting and selecting shaft (10) in the axial direction and whereby
the swinging arm selector (13) and the spring element (17) are in moveable connection with each other via a selector pin (15) in the axial direction on the shifting and selecting shaft (10),
**characterised in that,**
the selector pin (15) is fastened to a retaining element (20) which is mounted coaxially and rotatably with respect to the shifting and selecting shaft (10) and which extends radially with respect to the shifting and selecting shaft (10) out from it whereby the selector pin (15) is axially moveable in the selector swinging arm (13),
the spring element (17) is formed as a cylindrical helical spring (17) which has a winding pitches arranged essentially coaxial with the shifting and selecting shaft (10), whereby the shifting and selecting shaft (10) extends through the winding and
the cylindrical helical spring (17) has a spring arm extending from the winding which exerts a force on the selector pin (15) which acts with respect to the shifting and selecting shaft (10) in the circumferential direction.

4. A shifting mechanism according to claim 3, **characterised in that** the retaining element (20) is mounted so as to slide on the shifting and selecting shaft (10).

5. A shifting mechanism according to claim 3 or claim 4 **characterised in that** the spring arm lies immediately onto the selector pin (15).

6. A selector mechanism in accordance with one of the claims 3 to 5, **characterised in that** a roller (19) is rotatably arranged on the selector pin (15) whose outer surface rolls as a working surface on an associated work surface of a further spring element which is arranged on the gearbox housing (11).

## Revendications

1. Mécanisme de changement de vitesse pour une boîte de vitesses à engrenages, d'un véhicule automobile, dans lequel
- un arbre de commutation et de sélection (10), central, monté à rotation et de manière à coulisser axialement dans une boîte de vitesses (11), sélectionne
par sa rotation, chaque fois une liaison de changement de vitesse à actionner dans un couloir de commutation et permet par coulissement axial consécutif de commuter les rapports de vitesse,
- au moins une bielle de sélection (13) reliée solidairement en rotation à l'arbre de commutation et de sélection (10) peut être dégagée contre la force d'au moins un élément de ressort (16, 17) à partir de sa position neutre au moins dans une position de fin de sélection,
- la bielle de sélection (13) est reliée solidairement à l'arbre de commutation et de sélection (10),
- la bielle de sélection (13) et l'élément de ressort (16, 17) peuvent être déplacés l'un par rapport à l'autre dans la direction axiale de l'arbre de commutation et de sélection (10), par l'intermédiaire d'une broche de sélection (15),
- la broche de sélection (15) est fixée axialement dans le bras de sélecteur (13) et de manière coulissante axialement dans l'élément de ressort (16, 17), et
- l'élément de ressort (16, 17) comporte un moyeu cylindrique 16 installé de manière coulissante dans la direction axiale sur la broche de sélection (15),
**caractérisé en ce que**
la broche de sélection (15) est en saillie seulement d'un coté vers la bielle de sélection (13) et vient axialement en saillie par rapport à la bielle de sélection (13),
l'élément de ressort (16, 17) est formé par le moyeu cylindrique (16) et un ressort à branche (17),
le ressort à branche (17) comporte un enroulement essentiellement coaxial à l'arbre de commutation et de sélection (10), l'arbre de commutation et de sélection (10) s'étendant à travers la paroi et
le ressort à branche (17) comporte un bras de ressort en saillie de l'enroulement qui s'appuie contre le moyeu (16).

2. Mécanisme de changement de vitesse selon la revendication 1,
**caractérisé en ce que**
le moyeu (16) comporte une rainure à sa périphérie extérieure dans laquelle pénètre le bras à ressort du ressort de branche (17).

3. Mécanisme de changement de vitesse pour une boîte de vitesses à plusieurs rapports d'un véhicule, dans lequel
- un arbre de commutation et de sélection (10) central, monté en rotation et coulissement axial dans la boîte de vitesses (11), sélectionne en tournant, chaque fois l'une des liaisons de commutation actionnée dans un couloir de commutation, et commute des rapports de vitesse par coulissement axial consécutif, au moins une bielle de sélection (13) reliée solidairement en rotation à l'arbre de commutation et de sélection (10), peut basculer contre la force des ressorts au moins contre un élément de ressort (7) à partir de sa position neutre ou sensiblement à partir de cette position de fin de course de sélection,
- la bielle de sélection (13) dans la direction axiale est reliée solidairement en rotation à l'arbre de commutation et l'arbre de vitesse (10) et
- la bielle (13) et l'élément de ressort (17) sont couplés l'un par rapport à l'autre dans la direction axiale de l'arbre de sélection (10), en étant reliée par l'intermédiaire d'une broche de sélection (15),
**caractérisé en ce que**
la broche de sélection (15) est fixée à un élément de fixation (20) monté coaxialement et à rotation par rapport à l'arbre de commutation et de sélection (10) et qui s'écarte
radialement de l'arbre de commutation et de sélection (10), la broche de sélection (15) coulissant axialement dans la bielle de sélection (13),
l'élément de ressort (17) est formé par un ressort à branche (17) qui comporte un enroulement monté essentiellement coaxial à l'arbre de commutation et de sélection (10), l'arbre de commutation et de sélection (10) traversant l'enroulement, et
le ressort à branche (17) comporte un bras de ressort qui s'écarte de l'enroulement, et qui applique une force à la broche de sélection (15) agissant dans la direction périphérique par rapport à l'arbre de commutation et de sélection (10).

4. Mécanisme de changement de vitesse selon la revendication 3,
**caractérisé en ce que**
l'élément de fixation (20) est un moyeu monté en coulissement sur l'arbre de commutation et de sélection (10).

5. Mécanisme de commutation selon la revendication 3 ou 4,
**caractérisé en ce que**
le bras de ressort est appliqué directement contre la broche de sélection (15).

6. Mécanisme de commutation selon l'une des revendications 3 à 5,
**caractérisé en ce que**
la broche de sélection (15) porte un galet (19) monté en rotation, dont la surface périphérique fonctionne comme surface active roulant sur une surface active associée d'un autre élément de ressort installé sur la boîte de vitesses (11).
